# EUROPEAN PATENT APPLICATION

(11) **EP 4 625 615 A1**
(43) Date of publication of application: **01.10.2025**
(21) Application number: 23893669.4
(22) Date of filing: 13.11.2023
(51) Int. Cl.: H01M 10/613, H01M 10/6551, H01M 10/6554, H01M 10/6556

(54) **FLEXIBLE HEAT EXCHANGE DEVICE**

(30) Priority: 23.11.2022 CN 202211476490
(71) Applicant: Shanghai Yika New Energy Technology Co., Ltd, Shanghai 201599 (CN)
(72) Inventor: ZHANG, Qingmian, Shanghai 201599 (CN)
(74) Representative: dompatent von Kreisler Selting Werner - Partnerschaft von Patent- und Rechtsanwälten mbB
(86) International application number: PCT/CN2023/131301
(87) International publication number: WO 2024/109579

(57) **Abstract**

The present application provides a flexible heat exchange device. The flexible heat exchange device comprises a support base, a contact film, and protruding structures; the contact film and the support base are provided with a plurality of the protruding structures; the support base is flexibly connected to the contact film by means of the protruding structures; each protruding structure comprises an internal connection structure forming an inclined angle with the surface of the support base; when contact deformation or internal pressure deformation occurs to the contact film, the support base is flexibly attached and in contact with the contact film by means of the deformation of the internal connection structures, such that the contact area between the flexible heat exchange device and a device needing heat exchange is increased, and the area can be further increased along with the increase of the pressure of an internal cooling fluid. The plurality of protruding structures are provided between the support base and the contact film, the connection between the contact film and the protruding structures is equivalent to an anchor of the contact film, such that the pressure resistance level of the contact film can be improved, and moreover, the contact film can provide enough flexible deformation space to make up a gap between the heat exchange device and a heat exchange surface of a battery cell, so as to absorb the mechanical manufacturing tolerances of the heat exchange device and the device needing heat exchange to achieve good attachment and full contact and ensure the heat exchange efficiency, thereby achieving a good heat exchange effect.

## Description

### Technical Field

The present invention relates to the field of heat exchange technology, in particular to a flexible heat exchange device.

### Background

Power batteries provide energy for electronic components, and their operation requires a suitable temperature range. During charging and discharging, heat will be generated due to the existence of internal resistance. The high temperature generated by heat accumulation will reduce its service life, and in severe cases, it may lead to thermal runaway of the battery.

Sometimes a large number of cells need to be connected in series and parallel to meet energy and power requirements. Therefore, the temperature range of the power battery needs to be controlled during operation to prevent the temperature from being too high or too low. Due to manufacturing tolerances, there is a certain gap between the heat exchange surface composed of multiple batteries and the heat exchange device. The existing technology uses metal heat exchangers combined with thermal interface materials to perform heat exchange on power batteries by filling the gaps with thermal interface materials such as thermal pads and thermal gels (mainly made of low-hardness polymers with high thermal conductivity fillers). However, the use of metal heat exchangers and additional thermal interface materials greatly increases the weight of the entire heat exchange system, increases the complexity of assembling the power battery and the heat exchange device, and not only results in poor heat exchange effects but also complicates the assembly, making it difficult to effectively use the power batteries.

Therefore, there is a need for a novel heat exchange solution.

### Summary

In view of this, embodiments of this specification provide a flexible heat exchange device that is used in a safe heat exchange process.

The embodiments of this specification provide the following technical solutions:
Embodiments of this specification provide a flexible heat exchange device, which includes a support base, a contact film and a protruding structure;
The contact film and the support base are provided with multiple protruding structures, which flexibly connect the support base and the contact film through the protruding structures. The protruding structures include an internal connection structure that forms an inclined angle with the surface of the support base. When the contact film undergoes contact deformation or internal pressure deformation, the internal connection structure deforms, causing the contact film to flexibly conform and contact the device requiring heat exchange, increasing the contact area between the flexible heat exchange device and the device requiring heat exchange.

Compared with the prior art, the beneficial effects achieved by at least one of the above technical solutions adopted in the embodiments of this specification at least include:
The material density of the flexible heat exchange device in the embodiment of this specification is much smaller than that of the metal heat exchanger. Compared with the metal heat exchanger and its thermal conductive interface material, the weight can be reduced by >50%, so it is lighter. The flexible heat exchange device can also withstand external impacts. It plays a buffering role and protects the battery core. It can provide enough flexible deformation space to make up for the gap, so as to absorb the mechanical tolerance of the heat exchange device and the heat exchange device to achieve a good fit, and achieve a good fit between the heat exchange device and the battery core heat exchange surface. Full contact ensures heat exchange efficiency to achieve good heat exchange effect, always maintains good contact, is easy to assemble and disassemble, and reduces costs.

The flexible heat exchange device is fixed by friction using pre-compression, eliminating the need for additional fixing methods. The flexible support base is made of thermoplastic elastomer and a special convex structure, which can provide sufficient flexibility to avoid plastic deformation of the contact film (ie, the flexible film) due to excessive force. The connection between the protruding structure and the flexible film is equivalent to the anchor point of the flexible film, which can control the deformation degree of the flexible film, increase the withstand pressure of the system, adjust the flow state of the heat exchange fluid, and improve the heat exchange efficiency.

### Brief Description of the Drawings

In order to more clearly illustrate the technical solutions of the embodiments of the present application, the drawings required to be used in the embodiments will be briefly introduced below. Obviously, the drawings in the following description are only some embodiments of the present application. Those skilled in the art can also obtain other drawings based on these drawings without exerting creative efforts.
Fig. 1 shows a schematic diagram of the appearance of a flexible heat exchange device provided by an embodiment of this specification;
Fig. 2 shows a schematic diagram of a protruding structure provided by an embodiment of this specification;
Fig. 3 shows a cross-sectional view of a flexible heat exchange device provided by the embodiment of this specification;
Fig. 4 shows a schematic diagram of the ribs provided by the embodiment of this specification;
Fig. 5 shows a second schematic diagram of the ribs provided by the embodiment of this specification;
Fig. 6 shows a schematic diagram of rib deformation provided by the embodiment of this specification;
Fig. 7 shows a third schematic diagram of ribs provided by the embodiment of this specification;
Fig. 8 shows a fourth schematic diagram of the ribs provided by the embodiment of this specification;
Fig. 9 shows a schematic diagram of a protruding point provided by an embodiment of this specification;
Fig. 10 shows a schematic diagram of a protruding point provided by an embodiment of this specification from various viewing angles;
Fig. 11 shows another schematic diagram of the protruding point provided by an embodiment of this specification;
Fig. 12 shows a schematic diagram of another protruding point corresponding to various viewing angles provided by the embodiment of this specification;
Fig. 13 shows a schematic view of another protruding point corresponding to the protruding structure from various angles provided by an embodiment of this specification;
Fig. 14 shows a schematic diagram corresponding to various viewing angles of the first rib provided by the embodiment of this specification;
Fig. 15 shows a schematic diagram corresponding to various viewing angles after the improvement of the first rib provided by the embodiment of this specification;
Fig. 16 shows a schematic diagram corresponding to various viewing angles of the second type of rib provided by the embodiment of this specification;
Fig. 17 shows a schematic diagram corresponding to various viewing angles after the improvement of the second type of rib provided by the embodiment of this specification;
Fig. 18 shows a schematic diagram of the double-sided ribs corresponding to various viewing angles provided by the embodiment of this specification;
Fig. 19 shows a schematic diagram corresponding to various viewing angles after the improvement of the third rib provided by the embodiment of this specification.

### Description of the Embodiments

The embodiments of the present application will be described in detail below with reference to the accompanying drawings.

The following describes the implementation of the present application through specific examples. Those skilled in the art can easily comprehend the other advantages and effects of the present application from the content disclosed in this specification. Obviously, the described embodiments are only some of the embodiments of the present application, but not all of the embodiments. The present application can also be implemented or applied through other different specific embodiments, and various details in this specification can also be modified or changed in various ways based on different viewpoints and applications without departing from the spirit of the present application. It should be noted that, as long as there is no conflict, the following embodiments and the features in the embodiments can be combined with each other. Based on the embodiments in this application, all other embodiments obtained by those of ordinary skill in the art without creative efforts fall within the scope of protection of this application.

To illustrate, the following describes various aspects of embodiments that are within the scope of the appended claims. It should be apparent that the aspects described herein may be embodied in a wide variety of forms and that any specific structure and/or function described herein is illustrative only. Based on this application, those skilled in the art will appreciate that one aspect described herein can be implemented independently of any other aspect, and that two or more of these aspects can be combined in various ways. For example, apparatuses may be implemented and/or methods practiced using any of the numbers and features set forth herein. Additionally, such apparatus may be implemented and/or methods practiced using other structures and/or functionality in addition to one or more of the aspects set forth herein.

It should also be noted that the diagrams provided in the following embodiments are only schematic representations of the basic concept of the present application. The drawings only show the components relevant to the present application and are not drawn based on the actual number, shape, or size of the components. Dimension drawing, in actual implementation, the type, quantity and proportion of each component can vary, and the component layout type may also be more complex.

Additionally, in the following description, specific details are provided to facilitate a thorough understanding of the examples. However, one skilled in the art will understand that implementations may be carried out without these specific details.

Due to manufacturing tolerances, gaps exist between the heat exchange surfaces of multiple battery cells and the heat exchange device. In order to maintain the appropriate operating temperature of the power battery, the existing technology uses metal heat exchangers combined with thermal interface material to perform heat exchange on the power batteries. by filling the gaps with such thermal interface materials such as thermal pads and thermal gel. However, using metal heat exchangers and additional thermal interface materials greatly increases the weight of the entire heat exchange system and complicates the assembly process between the power batteries and the heat exchange device. Not only does the heat exchange effect be poor, but it also makes the heat exchange assembly complex, which is not conducive to the effective use of power batteries.

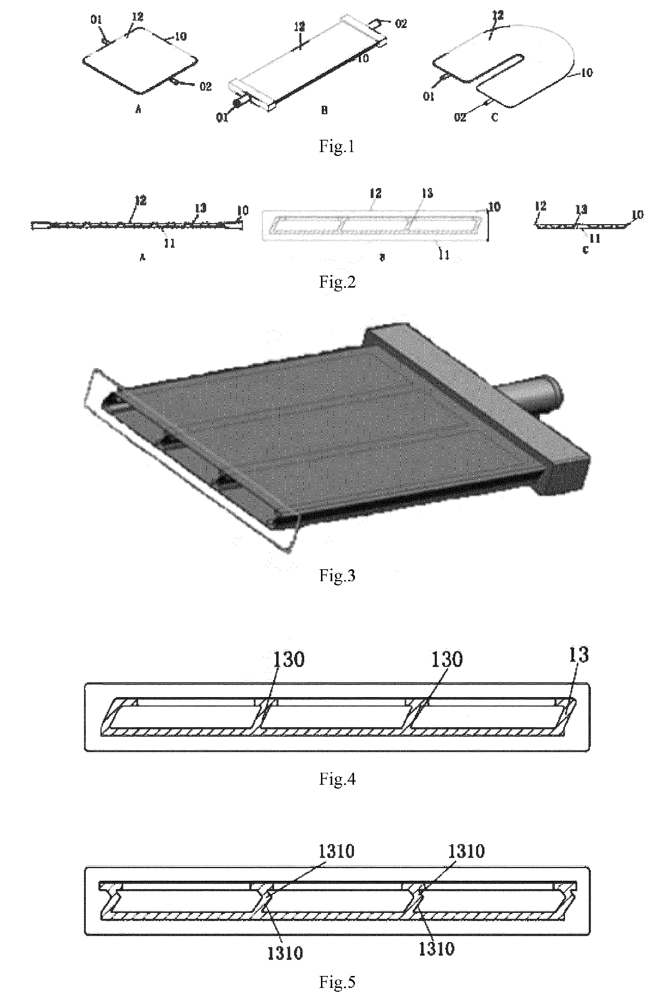

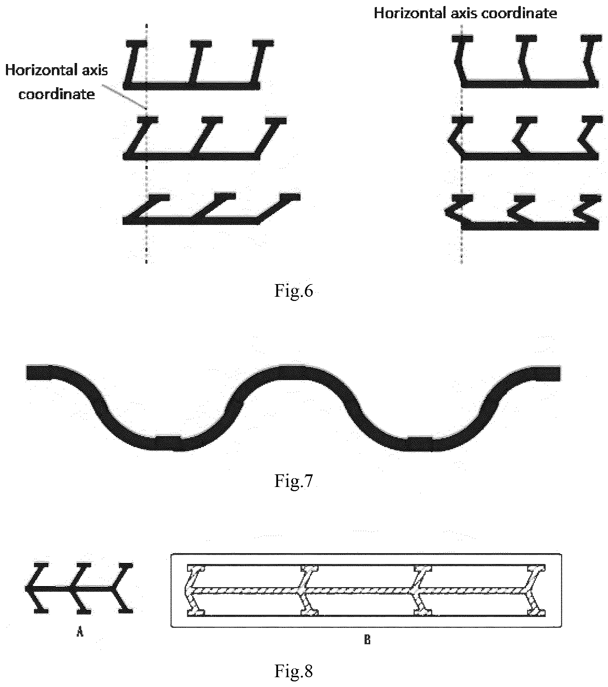

Based on this, the embodiment of this specification proposes a novel flexible heat exchange solution: as shown in Fig. 1 and 2, a protruding structure is disposed between the flexible support base and flexible contact film (in the present invention, the contact film and/or the flexible film may refer to the same component). By arranging an internal connecting structure of the protruding structure at an inclined angle (i.e., the internal connecting structure of the protruding structure is non-perpendicular to both the support base and contact film, refer to Fig. 6), when the contact film undergoes contact deformation and internal pressure deformation occur, the internal connection form of the protruding structure is changed to flexibly connect the contact film with the device requiring heat exchange, thereby increasing the contact film area between the flexible heat exchange device and the device requiring heat exchange, enhancing heat exchange efficiency, and improving a pressure resistance level of the contact film. Fig. 1 and Fig. 2 are respectively relevant diagrams of the flexible heat exchange device and the protruding structure in some examples. They are only used to emphasize the overall concept of the embodiments of this specification and are not limited to the structures shown in Fig. 1 and Fig. 2. At the same time, those skilled in the art can understand that the protruding structure of the present invention can be a structure independent of the flexible film and the support base, or can be a structure integrally formed with the support base, or can be a part of the support base. Additionally, in terms of manufacturing processes, the protruding structure and the support base may either be separately fabricated or integrally formed, all of which fall within the scope of protection of the present invention.

The following describes the technical solutions provided by each embodiment of the present application with reference to the accompanying drawings.

As shown in Fig. 1 and Fig. 2, the embodiment of this specification provides a flexible heat exchange device 10, which may include a support base 11, a contact film 12 and protruding structures 13. A plurality of protruding structures are provided on the support base to flexibly connect the support base and the contact film, improving the pressure resistance of the contact film, with the internal connection structure of the protruding structure arranged at an inclined angle. When the contact film undergoes contact deformation and internal pressure deformation, the internal connection form of the protruding structure is altered to flexibly connect the contact film with the device requiring heat exchange, thereby increasing the contact film area between the flexible heat exchange device and the device requiring heat exchange, improving heat exchange efficiency, and enhancing the pressure resistance of the contact film. The flexible heat exchange device further includes at least one water inlet and water outlet, which communicate with a circulation path of external fluid, wherein the water inlet and outlet portions can generally be welded to the support base as injection-molded components or directly injection-molded with the support base. See heat exchange fluid inlet 01 and heat exchange fluid outlet 02 in Fig. 1.

The flexible fit contact described in the present invention means that through the adjustment of the fluid between the contact film and the support base, the protruding structure can provide changes in the vertical distance between the contact film and the support base, so that the contact film can provide sufficient flexible deformation space to compensate for the gap between the heat exchange device and the device requiring heat exchange. Since the present invention provides multiple protruding structures between the contact film and the support base, each protruding structure allows the contact film to provide sufficient flexible deformation space to compensate for the mechanical manufacturing tolerances of the heat exchange device and the device requiring heat exchange to achieve good adhesion. Close and full contact, that is, the contact area between the flexible heat exchange device and the device requiring heat exchange is achieved, ensuring the heat exchange efficiency and achieving a good heat exchange effect.

This application is not limited to heat exchange of power batteries, but also applies to heat exchange of other electronic devices, such as mobile phones, computers, vehicle central control units, communication base stations and other equipment. The chips in these devices will generate a large amount of heat when working, but due to excessive temperature during use will affect the working efficiency and life of the chip. Traditional solutions mostly use thermally conductive interface materials, such as thermally conductive silicone grease or thermally conductive gel, combined with metal fins or metal liquid cooling plates for heat dissipation. The metal fins are used to exchange heat with the air, which takes up a lot of space and has low heat exchange efficiency.

Specifically, the support base is divided into extrusion or injection molded parts according to its flexible material characteristics and manufacturing process flow. In some embodiments, the thermal conductivity of the support base can be improved by adding some highly thermally conductive fillers such as graphite, metal oxides, boron nitride, etc., thereby increasing the heat exchange efficiency with the fluid and the temperature uniformity performance.

The contact film (ie, flexible film) serves as the main heat exchange contact interface and can be a multi-layer composite film. If its outer layer is a protective layer that plays an insulating and anti-corrosion role, the middle metal layer provides strength and sealing, and also plays a role in uniform temperature, and the innermost layer (that is, close to the corresponding side of the support base) contains an adhesive layer, which can welded together with the support base. Due to the existence of the middle metal layer, the elastic modulus of the contact film is much larger than that of the support base. In addition, the special internal protruding structure design between the two ensures that the support base deforms preferentially to avoid plastic deformation of the contact film and rupture of the flexible film. The support base is a thermoplastic elastomer (TPE, Thermoplastic Elastomer) extrusion or injection molded part, including but not limited to styrene (TPS), olefin (TPV), urethane (TPU), corresponding to various production processes, and the protruding structure can have different shapes. For example, the protruding structure can be provided with ribs according to the extrusion process, or the protruding structure can include multiple protrusions according to the injection molding process. Therefore, in the embodiments of this specification, the protruding structure between the contact film and the support base has its internal connection structure tilted. When the contact film generates contact deformation, the internal connection form of the protruding structure is changed, so that the support base and the support base are connected. The contact film is flexibly attached and contacted, thereby increasing the contact film area between the flexible heat exchange device and the device requiring heat exchange.

The protruding structures of the present invention can be mainly realized by means of ribs, wavy arc-shaped structures, protruding points, etc., but is not limited to this.

In some embodiments of the present invention, the protruding structures includes ribs, and the ribs are arranged at an inclined angle with the support base. The inclined angle is used to enhance the flexible contact between the support base and the contact film during the deformation process of the ribs.

With reference to Fig. 3 and Fig.4, the protruding structures 13 includes a plurality of ribs 130. Said ribs 130 are arranged at an inclined angle relative to the support base 11 (i.e., neither perpendicular nor parallel within the angular range of (0°, 180°)), thereby enhancing flexible conformal contact between the support base and the contact film during deformation of the ribs. Therefore, when the protruding structure is subjected to external compression or internal fluid tension, it is mainly subjected to bending moments instead of vertical stretching and compression, which can greatly improve the flexibility of the protruding structure.

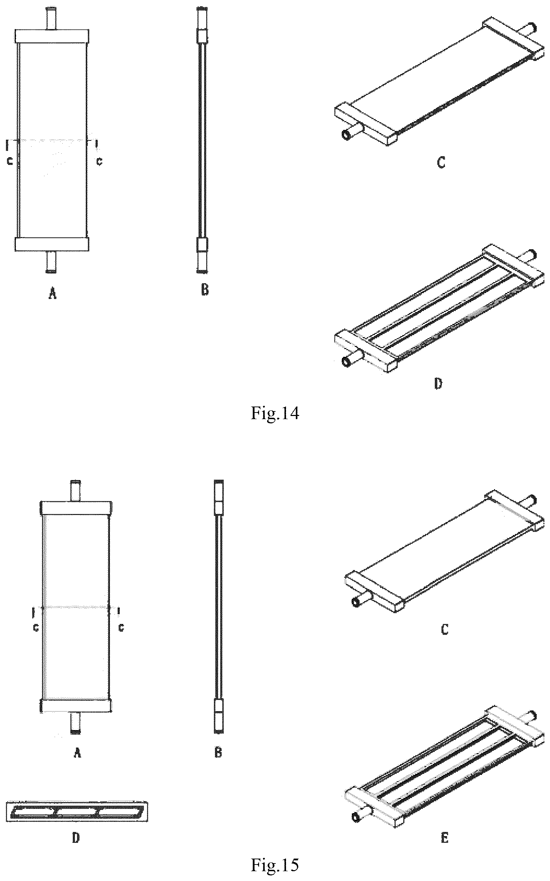

Fig. 14 shows an example of the first type of rib shown in Fig. 4. Fig. 4 is a cross-sectional view of part A in Fig. 14 along the cc direction. Part B in Fig. 14 is a side view of the first type of rib structure corresponding to the flexible heat exchanger., Part C in Fig. 14 is a three-dimensional perspective view of the first rib structure corresponding to the flexible heat exchanger, and Part D in Fig. 14 is a three-dimensional perspective view of the first rib structure corresponding to the flexible heat exchange device with the contact film removed. As shown in Fig. 4, the support base and the ribs have the same material, and the ribs and the contact film have compatible materials.

In some embodiments, each rib in the protruding structure includes at least two connected sub-ribs, and a connection angle is set between adjacent connected sub-ribs. The connection angle makes the contact film nearly completely envelop the contact surface of the device requiring heat exchange during the deformation process, thereby increasing the contact area between the flexible heat exchange device and the device requiring heat exchange.

As shown in Fig. 5, each rib of the protruding structure can include at least two sub-ribs 1310, and a preset connection angle is set between the connected sub-ribs. The connection angle makes the contact film nearly envelop the contact surface of the heat exchange device during the deformation process, thereby increasing the contact area between the flexible heat exchange device and the device requiring heat exchange, and as shown in Fig. 6, during vertical displacement of the upper surface of each sub-rib in the horizontal direction, the horizontal coordinates of the corresponding lower surface remain relatively unchanged. This configuration thereby avoids the risk of abrasion caused by relative displacement between the flexible film and the contact surface of the device requiring heat exchange. The connection angles are defined within the range of (0°, 180°), excluding 90°, and are neither parallel nor perpendicular.

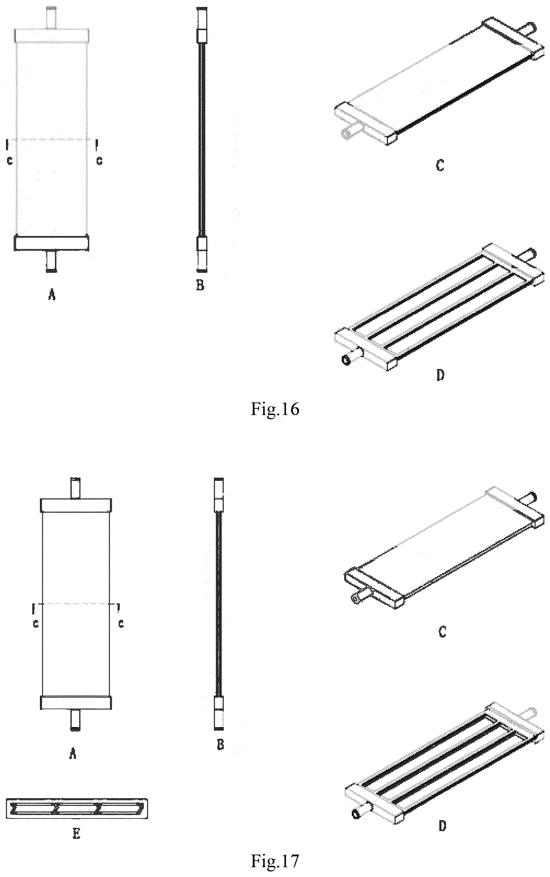

Fig. 16 shows an example of the second type of rib shown in Fig. 5. Fig. 5 is a cross-sectional view of part A in Fig. 16 along the cc direction, and part B in Fig. 16 is a side view of the second type of rib structure corresponding to the flexible heat exchanger. , Part C in Fig. 16 is a three-dimensional view of the second rib structure corresponding to the flexible heat exchanger, and Part D in Fig. 16 is a three-dimensional view of the second rib structure corresponding to the flexible heat exchanger with the contact film removed. As shown in Fig. 5, the support base and the ribs have the same material, and the ribs and the contact film have compatible materials.

In some embodiments, the second rib structure in Fig. 5 can be deformed into the second rib structure as shown in part E of Fig. 17 according to the different materials of the ribs and the support base, where the contact film and the support base are made of identical materials, while the ribs are respectively connected to the contact film and the support base using materials with compatible characteristics. The cross-sectional view of part A in Fig. 17 along CC is part E in Fig. 17. Part B in Fig. 17 is a side view of the deformed rib structure corresponding to the flexible heat exchanger. Part C in Fig. 17 is the deformed rib structure corresponding to the flexible heat exchanger. A three-dimensional view of the heat exchanger. Part D in Fig. 17 is a three-dimensional view of the flexible heat exchanger corresponding to the deformed rib structure with the contact film removed.

In other embodiments of the present invention, the ribs are in the shape of multiple wavy arcs.

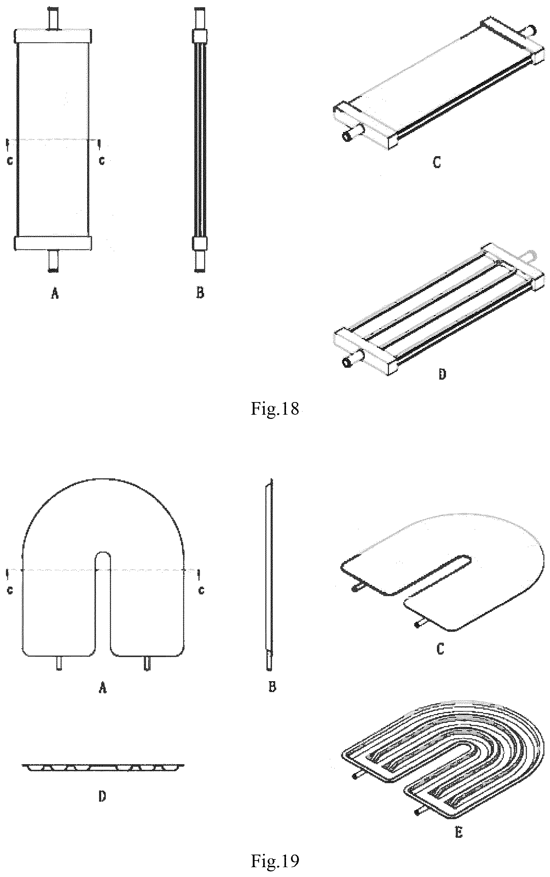

As shown in Fig. 7, when the inclined angle between each rib is larger and tends to 180°, or the connection angle between each sub-rib is larger and tends to 180°, the ribs will appear in multiple wavy arc-shapes during the deformation process. It not only increases the contact area between the flexible heat exchange device and the device requiring heat exchange, but also avoids the risk of wear caused by relative displacement of the contact surface between the flexible film and the device requiring heat exchange. The wavy arc-shaped ribs shown in the example of part C in Fig. 1 have a bulging and protruding shape in the three-dimensional view of the flexible heat exchange device. A complete rib of this wavy arc-shaped example has a curved U-shape inside the flexible heat exchanger. The wavy arc-shaped ribs in part C in Fig. 1 can achieve more complex flow channel design to achieve better flow distribution and temperature uniformity. Correspondingly, Fig. 19 shows a schematic view of the wavy arc-shaped ribs from other perspectives, in which the cross-sectional view of part A along cc in Fig. 19 is an example of part C in Fig. 1 (or part D in Fig. 19), Part B in Fig. 19 in the middle is a side view of the wavy arc-shaped ribs corresponding to the flexible heat exchanger. Part C in Fig. 19 is a three-dimensional view of the wavy arc-shaped ribs corresponding to the flexible heat exchanger. Part E in Fig. 19 shows the wavy arc-shaped ribs removed, with a three-dimensional view of the flexible heat exchanger without the contact film. The structure of the ribs in this embodiment is similar to the protruding point structure in the example below, but its production process is completely different from that of the protruding points.

The wavy arc-shaped structure shown in Fig. 7 can be regarded as a separate protruding structural form, or as a specific structural form of ribs, that is, two adjacent ribs (or sub-ribs) form an arc-shaped structure and are interconnected.

Regardless of whether the protruding structure comprises ribs, sub-ribs, or wavy arc- shaped structures as shown in Fig. 6 and Fig.7, the horizontal upper surface and the corresponding lower surface of the protruding structure remain relatively unchanged during deformation, thereby avoiding the risk of wear caused by relative displacement of the contact surface between the flexible film and the device requiring heat exchange. This further improves the heat exchange effect between the flexible heat exchange device and the device requiring heat exchange.

In some embodiments, the bonding part between the contact film and the support base comprises a compatible polypropylene (PP) component, so the first rib structure in Fig. 4 is deformed into the first rib structure exemplified in section D of Fig. 15 depending on material differences between the contact film and support base. Herein, the contact film and the support base share identical materials, while the ribs are respectively connected to the contact film and support base using materials exhibiting compatible characteristics. The cross-sectional view of part A along CC in Fig. 15 is part D in Fig. 15. Part B in Fig. 15 is a side view of the deformed rib structure corresponding to the flexible heat exchanger. Part C in Fig. 15 is the deformed rib structure corresponding to the flexible heat exchanger. A three-dimensional view of the heat exchanger. Part E in Fig. 15 is a three-dimensional view of the flexible heat exchanger corresponding to the deformed rib structure with the contact film removed.

In some embodiments, the flexible heat exchange device comprises two contact films, or the protruding structure comprises ribs arranged on both sides of the support base. In the structure shown in Fig. 8, the flexible heat exchange device has a double-layer structure, in which the support base is set in the middle, and two contact films (flexible films) are set on both sides. In the structure shown in Fig. 8 , the upward-facing surface of the support base is defined as the first side of the support base, and the downward-facing surface of the support base is defined as the second side of the support base. Correspondingly, the flexible film located above the support base can be defined as the first contact film (flexible film), and the flexible film located below the support base can be defined as the second contact film (flexible film). At the same time, the ribs located between the first side of the support base and the first contact film can be defined as first ribs, and the ribs located between the second side of the support base and the second contact film can be defined as second ribs.

As shown in Fig. 8, flexible films can be attached to both sides of the ribs to achieve double-sided heat exchange while avoiding relative displacement of the contact films. Combined with Fig. 8, Fig. 18 shows a schematic diagram of the rib structure on both sides from another perspective. Part B in Fig. 8 is a cross-sectional view of Fig. 18 along the cc direction. Part A in Fig. 8 is an example of the shape of the ribs on both sides. Part B in Fig. 18 in the middle is a side view of the flexible heat exchanger corresponding to the ribs on both sides. Part C in Fig. 18 is a three-dimensional view of the flexible heat exchanger corresponding to the ribs on both sides. Part D in Fig. 18 shows the ribs on both sides with the contact film removed. A three-dimensional view of a flexible heat exchanger. Similarly, in the rib structures shown in Fig.s 4, 5 and 7, the flexible support base can be replaced with a flexible film, thereby achieving double-sided heat exchange on both sides of the ribs.

Those skilled in the art will understand that the structure shown in Fig. 8 only shows a structure with ribs on both sides of the support base, but is not limited to this. The aforementioned structure may also be selectively combined with the structure shown in Fig. 6. That is, the ribs on both sides of the support base may also have the sub-rib structure shown in Fig. 6 , or one of the first ribs and the second ribs may have the sub-rib structure shown in Fig. 6. In this way, through the different deformation degrees of the ribs on both sides of the support base, the two sides of the support base can have different pressure control to achieve applications in specific scenarios.

In other embodiments of the present invention, the protruding structure comprises a plurality of protruding points, wherein the connection height of the contact film to the support base is identical to that of the protruding points.

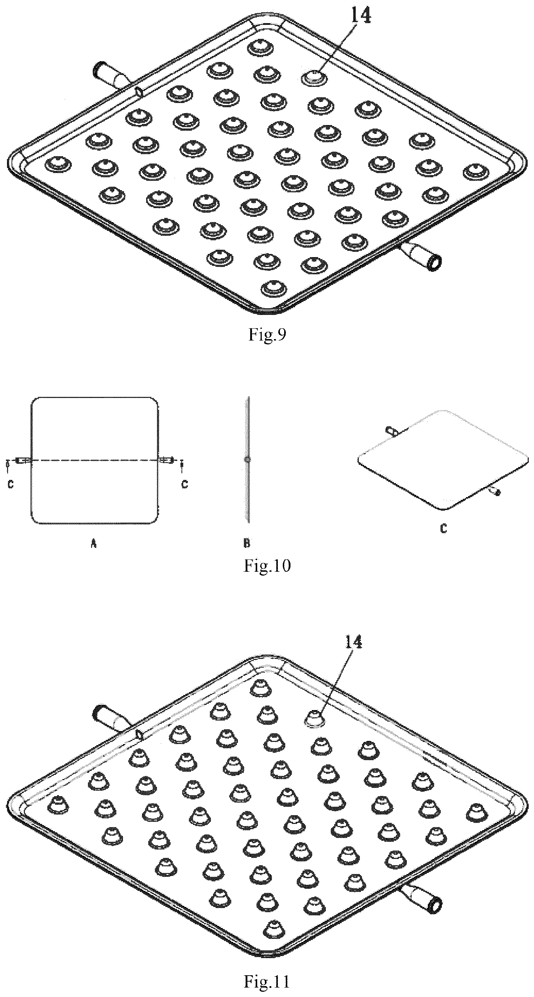

As shown in Fig. 9 and Fig. 10, according to different manufacturing processes of the support base, where the support base is an injection-molded component, the support base in Fig. 9 is provided with a plurality of protruding points 14. The protruding points are connected to the contact film with flush alignment, wherein the connection height between the contact film and support base is identical to that of the protruding points. This configuration not only facilitates injection molding production and demolding operations, but also optimizes turbulent flow design for heat exchange fluid within the flexible heat exchange device. Specifically, the connection height between the flexible film and the protruding structure matches the connection height between the support base and the flexible film frame (i.e., coplanar alignment), thereby achieving optimal heat transfer efficiency between the flexible heat exchange device and the device requiring heat exchange. The connection between the convex structure and the flexible film is equivalent to the anchor point of the flexible film, which can control the deformation degree of the flexible film, increase the withstand pressure of the system, adjust the flow state of the heat exchange fluid, and improve the heat exchange efficiency. Fig. 9 shows a protruding point structure. Fig. 10 is another view of the protruding point structure. The view of part A in the cc direction in Fig. 10 is an example of part A in Fig. 2. Part B in Fig. 10 is the protruding point structure. A side view example of a point structure corresponding to a flexible heat exchanger. Part C in Fig. 10 is a three-dimensional view of a convex point structure corresponding to a flexible heat exchanger.

In some embodiments, the protruding structure includes a plurality of protruding points, the contact film is provided with a plurality of protruding bosses correspondingly, and the height of the contact film connecting the support base and the connection height of the protruding points are different.

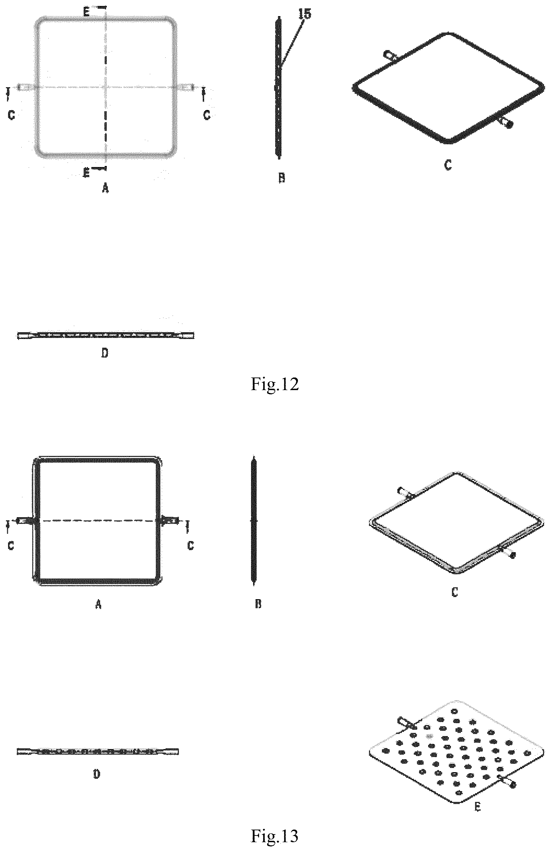

As shown in Fig. 11 and Fig. 12, the contact film is punched to produce a protruding boss 15 locally or in a large area, which matches the corresponding protruding point. That is, the connection height of the contact film to the support base is different from the connection height of the protruding points; the contact film and the support base form a frame having different heights. That is, the connection height of the contact film to the support base is not flush with the connection height of the protruding points. In some embodiments, the height of the protruding bosses in the stamped part of the contact film is not flush with the frame formed by the support base. For example, the height of the protruding point in the middle of the entire flexible heat exchange device is relatively low, while the height of the surrounding protruding points is relatively high. In some embodiments, the matching structure of the protruding points and the protruding bosses is more suitable for the heat exchange requirements of large tolerances. The connection between the protruding structure and the flexible film is equivalent to the anchor point of the flexible film, which can control the deformation degree of the flexible film, increase the pressure resistance, adjust the flow state of the heat exchange fluid, and improve the heat exchange efficiency. Part D in Fig. 12 is a cross-sectional view along the cc direction of part A in Fig. 12. Part B in Fig. 12 is a cross-sectional view along the ee direction of part A in Fig. 12. Part C in Fig. 12 is a non-flush protruding structure corresponding to flexibility. A three-dimensional view of the heat exchange device.

In some embodiments, the protruding points have different sizes or heights. As shown in Fig. 11 and Fig. 13, the protruding points can be set to different sizes according to actual needs to correspond to protruding bosses of different sizes. In some embodiments, the connection height of the protruding points may be set to be not exactly identical to that of the contact film, and may even exhibit an undulating connection height between the protruding points and the contact film. This corresponds to the undulating connection height of the contact film, which matches the varying sizes or connection heights of the protruding bosses on the contact film. As shown in part E in Fig. 13, there is another protruding structure. In this protruding structure, the protruding points are distributed on both sides of the support base. Some of the protruding points are protrude above the support base, and other protruding points are protrude below the support base. Part D in Fig. 13 is a cross-sectional view of part A in Fig. 13 along the cc direction. Part B in Fig. 13 is a side view of the flexible heat exchange device corresponding to the convex structure in this embodiment. Part C in Fig. 13 is a protruding structure in this embodiment. The structure corresponds to the three-dimensional view of the flexible heat exchange device. In some embodiments, the protruding points above or below the support base in Fig. 13 may be set to the same or different heights from the connection height of the contact film.

In combination with the aforementioned embodiments, the protruding structures are arranged on the support base with uniform spacing intervals or non-uniform spacing intervals. Regardless of the manufacturing processes used to form the protruding structures or the structural configurations and connection architectures of any described embodiments, said protruding structures may be arranged on the support base with uniform spacing intervals. Generally, uniform spacing intervals of the protruding structures facilitate turbulent flow of the heat exchange fluid within the flexible heat exchange device, thereby achieving optimized heat transfer efficiency. Alternatively, non-uniform spacing intervals may also be configured to achieve application-specific flow patterns based on operational requirements.

In some embodiments, the flexible heat exchange device further comprises: a heat exchange fluid inlet and a heat exchange fluid outlet, the heat exchange fluid inlet and the heat exchange fluid outlet are respectively provided at both ends or one end of the flexible heat exchange device; The heat exchange fluid inlet and the heat exchange fluid outlet are respectively arranged perpendicularly to or parallel to with the contact film; wherein the heat exchange fluid flows through the contact film while bypassing the protruding structure regions, thereby enhancing thermal exchange between the flexible heat exchange device and the device requiring heat exchange.

As shown in Fig. 1, the heat exchange fluid inlet 01 and the heat exchange fluid outlet 02 are specifically defined according to the heat exchange requirements. The heat exchange fluid inlet and the heat exchange fluid outlet are respectively arranged perpendicularly to or parallel to with the contact film; wherein the heat exchange fluid flows through the contact film while bypassing the protruding structure regions, thereby enhancing thermal exchange between the flexible heat exchange device and the device requiring heat exchange. In some embodiments, the heat exchange fluid inlet 01 and the heat exchange fluid outlet 02 can also be provided at a certain end of the flexible heat exchange device.

In some embodiments, the contact film comprises an insulative corrosion-resistant layer, a metallic layer, and a bonding layer. The support base is formed of a thermoplastic elastomer (TPE) comprising at least one selected from the group consisting of styrenic-based, olefinic-based, and urethane-based polymers.

The contact film (i.e., the flexible film), serving as the primary thermal exchange contact interface, is a multilayer composite film, generally including an outer protective layer of PA (polyamide, polyamide resin, abbreviation: PA)/PET (polyethylene terephthalate, commonly known as polyester resin, which is a polycondensate of terephthalic acid and ethylene glycol), functioning to provide insulation and corrosion resistance; a middle metallic layer providing structural strength and hermeticity, while achieving temperature uniformity; and an innermost bonding layer capable of being thermally welded to the flexible support base. Due to the presence of the metallic layer (which ensures temperature uniformity), the elastic modulus of the flexible film is significantly higher than that of the flexible support base. Combined with the specialized protruding structure design, this ensures that when the internal connecting structure of the protruding structure deforms, the flexible support base preferentially deforms to prevent plastic deformation and subsequent rupture of the flexible film. The flexible support base or support components are manufactured via extrusion or injection molding processes using thermoplastic elastomer (TPE), which includes but is not limited to styrenic-based (TPS), olefinic-based (TPV), urethane-based (TPU). This TPE material can be thermally welded directly to the innermost layer of the contact film without requiring additional adhesive layers. Furthermore, by adding thermally conductive fillers such as graphite, metal oxides, and boron nitride, the thermal conductivity of the support base can be enhanced, thereby improving heat exchange efficiency and temperature uniformity with the fluid medium. The inherent flexibility of the material, coupled with the engineered protruding structure design, provides sufficient compliance to accommodate dimensional tolerances at the thermal exchange interface.

It can be seen from the above embodiments that the protruding structure can be realized by means of ribs, wavy arcs, protruding points, etc., but is not limited to this. The connection between the protruding structure and the flexible film is equivalent to the anchor point of the flexible film, which can control the deformation degree of the flexible film. Specifically, the presence of multiple anchor points divides the flexible film into multiple regions, where the deformation degree of each region is determined by the deformation degree of the corresponding protruding structure. Each protruding structure can have a different deformation degree - for example, the deformation degree near the water inlet may be larger, while smaller at the outlet; or larger on the left side and smaller on the right side. In this way, the flexible film with controllable deformation can fully conform to the surface of the heat exchange device, increase the system's pressure resistance, and regulate the flow state of the heat exchange fluid to improve heat transfer efficiency.

The same and similar parts among the various embodiments in this specification can be referred to each other, and each embodiment focuses on its differences from other embodiments. In particular, for the product embodiments described later, since they correspond to the methods, the description is relatively simple. For relevant details, please refer to the partial description of the system embodiments.

The above are only specific embodiments of the present application, but the protection scope of the present application is not limited thereto. Any person familiar with the technical field can easily think of changes or substitutions within the technical scope disclosed in the present application. All are covered by the protection scope of this application. Therefore, the protection scope of this application should be subject to the protection scope of the claims.

## Claims

1. A flexible heat exchange device, wherein the flexible heat exchange device comprises: a support base, a contact film and protruding structures;
The contact film and the support base are provided with a plurality of said protruding structures, through which the support base is flexibly connected to the contact film; each protruding structure includes an internal connection structure forming an inclined angle with the surface of the support base; when the contact film undergoes contact deformation or internal pressure deformation, the support base becomes flexibly attached to and in contact with the contact film via deformation of said internal connection structures, thereby increasing the contact area between the flexible heat exchange device and a device requiring heat exchange.

2. The flexible heat exchange device according to claim 1, wherein said protruding structures comprise ribs, each rib having one end connected to the support base and another end connected to the contact film, with said ribs arranged at an inclined angle relative to the support base; said inclined angle being configured to enhance flexible conformal contact between the support base and contact film during rib deformation.

3. The flexible heat exchange device according to claim 2, wherein each rib in said protruding structures comprises at least two interconnected sub-ribs, with a connection angle defined between adjacent sub-ribs.

4. The flexible heat exchange device according to any one of claims 2-3, wherein the device comprises a first contact film disposed on a first side of the support base and a second contact film disposed on a second side of the support base; said protruding structures include first ribs on the first side and second ribs on the second side;
wherein each first rib connects the first side of the support base to the first contact film, and each second rib connects the second side of the support base to the second contact film.

5. The flexible heat exchange device according to claim 1, wherein said protruding structures comprise wave arc-shaped structure.

6. The flexible heat exchange device according to claim 1, wherein said protruding structures comprise a plurality of protruding points, wherein a connection height between the contact film and support base is identical to a connection height of the protruding points.

7. The flexible heat exchange device according to claim 1, wherein said protruding structures comprise a plurality of protruding points, and the contact film is provided with corresponding protruding bosses; wherein a connection height between the contact film and support base differs from a connection height of the protruding points.

8. The flexible heat exchange device according to claim 6 or 7, wherein said protruding points have different sizes or heights.

9. The flexible heat exchange device according to claim 1, wherein said protruding structures are arranged between the support base and contact film with uniform or non-uniform spacing intervals.

10. The flexible heat exchange device according to claim 1, wherein the device further comprises: a heat exchange fluid inlet and outlet disposed at both ends or one end of the flexible heat exchange device; said inlet and outlet being arranged perpendicular to or parallel with the contact film;
wherein the contact film comprises: a protective layer, a metallic layer, and a bonding layer; and the support base is formed of thermoplastic elastomer.

11. The flexible heat exchange device according to claim 1, wherein the contact film has a higher elastic modulus than the support base, such that deformation of internal connection structures in the protruding structures prioritizes deformation of the support base to prevent plastic deformation of the contact film.
